(19) Europäisches Patentamt
European Patent Office
Office européen des brevets

(11) **EP 1 884 381 A2**

(12) **DEMANDE DE BREVET EUROPEEN**

(43) Date de publication:
**06.02.2008 Bulletin 2008/06**

(51) Int Cl.:
***B60G 17/015*** (2006.01)

(21) Numéro de dépôt: **07301290.8**

(22) Date de dépôt: **01.08.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **04.08.2006 FR 0607171**

(71) Demandeur: **PEUGEOT CITROËN AUTOMOBILES S.A.**
**78140 Velizy Villacoublay (FR)**

(72) Inventeur: **Camp, Stéphane**
**92800 Puteaux (FR)**

(54) **Procédé de commande de suspension à centre de gravité optimisé et système intégrant le procédé de commande, notamment pour véhicule automobile**

(57) L'invention concerne un procédé de commande de suspension à centre de gravité optimisé pour véhicule comprenant les étapes suivantes :
- une étape de détection de situations de vie du véhicule ;
- une étape de synthèse d'une loi de contrôle commande du système de suspension adaptée à la situation de vie et aux paramètres du véhicule, ladite étape comprenant les étapes :
o d'obtention dans une table de données pré-établie d'un effort symétrique à appliquer à l'actionneur en fonction des paramètres de vitesse longitudinale du véhicule et de vitesse de débattement de l'actionneur;
o de calcul d'un effort en attaque et d'un effort en détente par application de coefficients à l'effort symétrique obtenus à partir de la table de données pré-établie, le coefficient appliqué pour obtenir l'effort en attaque étant sensiblement différent du coefficient appliqué pour obtenir l'effort en détente pour un ensemble déterminé de situations de vie du véhicule ;

- une étape de commande de l'actionneur depuis la valeur de l'effort en attaque et de la valeur de l'effort en détente.

L'invention a aussi pour objet un système intégrant ledit procédé de commande. En particulier, l'invention s'applique aux systèmes de suspension pour véhicule automobile et notamment celui-des suspensions semi-actives.

FIG.5

EP 1 884 381 A2

**Description**

L'invention concerne un procédé de commande de suspension à centre de gravité optimisé ainsi qu'un système intégrant ledit procédé de commande. En particulier, l'invention s'applique aux systèmes de suspension pour véhicule automobile et notamment aux suspensions semi-actives.

La demande des automobilistes, et du marché automobile en général, impose aux constructeurs de rechercher des systèmes dans le domaine des liaisons au sol, permettant d'accroître le confort et la sécurité des passagers à bord des véhicules. Les systèmes classiques de suspension ne permettent plus d'augmenter significativement ce confort et cette sécurité tant le compromis entre ces deux notions est difficile à trouver.

De manière générale, un système de suspension doit assurer plusieurs fonctions telle que la tenue de route, conservant les vibrations transmises à la caisse aussi faibles que possible, distribuant les forces reçues, dues par exemple aux accélérations ou décélérations de la vitesse du véhicule ou à des changements de direction, mais également le confort ressenti par un passager à bord du véhicule.

Plusieurs types de suspension ont déjà été proposés, et sont regroupés en trois principales catégories : les suspensions passives, les suspensions semi-actives et les suspensions actives.

Dans les suspensions passives, les suspensions ont un coefficient d'amortissement fixe et non linéaire en fonction de la vitesse de débattement de la suspension. Dans les suspensions actives, les suspensions fournissent un effort qui peut varier continûment sous le contrôle d'un système utilisant par exemple des moyens hydrauliques, permettant d'adapter l'amortissement aux conditions de la route.

Le comportement des suspensions semi-actives est identique à celui des suspensions actives. Cependant alors que dans ces dernières, il est nécessaire de recourir à une force externe pour contrôler les facteurs d'amortissement, dans les suspensions semi-actives, le contrôle est opéré uniquement en dissipant l'énergie présente.

Les suspensions semi-actives représentent ainsi une solution intermédiaire permettant de disposer de performances intéressantes à moindre coût.

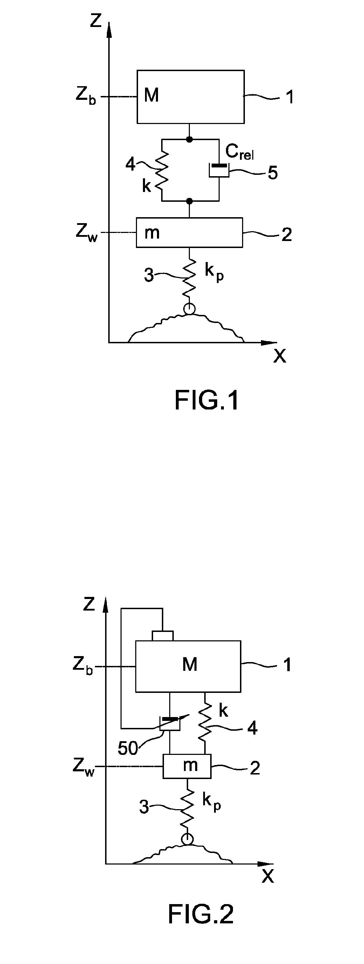

Le comportement d'un système de suspension passive peut être déterminé en utilisant par exemple le modèle illustré à la figure 1, incluant une masse suspendue 1 de masse M, représentant la masse de la caisse et une masse non-suspendue 2 de masse m représentant la masse de la roue. La masse non-suspendue 2 est couplée à la route par un ressort 3 de rigidité kp, correspondant à la rigidité du pneumatique.

La masse suspendue 1 est couplée à la masse non-suspendue 2 par un amortisseur, qui comprend un ressort 4, de rigidité non linéaire k et un actionneur 5 ayant un coefficient d'amortissement non linéaire constant Crel.

D'après le principe de D'Alembert appliqué au système illustré en figure 1, le modèle mathématique suivant peut être déduit :

$$M.\ddot{z}_b = -k.\left(z_b - z_w\right) - C_{rel}.\left(\dot{z}_b - \dot{z}_W\right)$$

$$m.\ddot{z}_w = k.\left(z_b - z_w\right) - k_p.\left(z_w - h\right) + C_{rel}.\left(\dot{z}_b - \dot{z}_W\right)$$

avec zb : position verticale de la caisse
zw : position verticale de la roue
$\dot{z}_b$ : vitesse verticale de la caisse
$\dot{z}_w$ : vitesse verticale de la roue
$(\dot{z}_b - \dot{z}_w)$ : représente la vitesse de débattement de la caisse à la roue.

La dérivée seconde $\ddot{z}$ de $z_b$, qui est l'accélération verticale de la caisse, est un indice possible du confort assuré par la suspension : plus cette dérivée est faible plus grand en est le confort.

La force exercée par la masse non suspendue 2 soit la roue, sur la route est un indice de la tenue de route. Plus cette dernière force est élevée (jusqu'à une limite optimale supérieure) meilleure en est la tenue de route.

Les limitations du système de suspension passive résident dans le fait qu'un seul coefficient Crel (en fonction de débattement de l'amortisseur) est présent pour ajuster les deux indices de confort et de tenue de route, ne permettant pas une optimisation élevée alors que ces deux indices sont indépendants l'un de l'autre.

En principe, ce problème peut être résolu en augmentant le nombre de paramètres, ce qui implique que la force exercée par l'actionneur dépende de plus d'un paramètre unique. Une solution proposée est décrite dans l'approche communément appelée « Sky Hook ».

Selon cette approche, la force exercée sur la caisse est proportionnelle à la vitesse absolue de la caisse dans un référentiel inertiel et à la vitesse relative entre la caisse et la roue.

Comme, la masse suspendue ne peut être directement connectée à la terre, le ciel est choisi comme système référentiel et la masse suspendue est considérée par rapport à cette référence. Le modèle illustré en figure 2 est ainsi adopté. L'actionneur 50 dans ce système, a un coefficient Csky variable ajusté avec retour depuis la masse 1 de la caisse vers l'actionneur 50 qui donnent la force Fam appliquée à l'actionneur 50.

Le modèle mathématique qui en découle est illustré par les équations suivantes

$$M.\ddot{z}_b = -k.(z_b - z_w) - F_{am}$$

$$m.\ddot{z}_w = k.(z_b - z_w) - k_p.(z_w - h) + F_{am}$$

La force Fam est proportionnelle à la vitesse absolue de la caisse et à la vitesse de débattement et répond ainsi à l'équation suivante :

$$F_{am}(t) = C_{rel}(t).V_{rel}(t) + C_{sky}(t).V_{abs}(t) = C_{rel}.(\dot{z}_b - \dot{z}_w) + C_{sky}.\dot{z}_b$$

Dans le cas de la suspension semi-active :

$$F_{am} = 0 \quad pour \quad F_{am}(\dot{z}_b - \dot{z}_w) < 0$$

Dans ce contexte (sky hook), l'invention propose un nouveau système de suspension utilisant un procédé de commande original pour déterminer les efforts à appliquer à l'actionneur 50. Plus précisément, en fonction de la situation de vie du véhicule, le procédé selon l'invention adapte les efforts à appliquer à l'actionneur 50 selon la dynamique de transfert de masse engendré par la sollicitation conducteur et les sollicitations sur la base de roue roulant sur une route non plane. Le procédé de commande selon l'invention permet de diminuer la hauteur du centre de gravité du véhicule tout en maintenant un roulis et un tangage de la voiture le plus faible possible.

L'invention a notamment pour but de pallier les inconvénients précités. A cet effet, l'invention a pour objet un procédé de commande de suspension pour véhicule comportant une caisse, au moins une roue, un système de suspension comportant au moins un actionneur couplé à la roue. Le procédé comprend les étapes suivantes :

- une étape de détection de situations de vie du véhicule ;
- une étape de synthèse d'une loi de contrôle commande du système de suspension adaptée à la situation de vie et aux paramètres du véhicule, ladite étape comprenant les étapes :

  o d'obtention dans une table de données pré-établie d'un effort symétrique à appliquer à l'actionneur en fonction des paramètres de vitesse longitudinale du véhicule et de vitesse de débattement de l'actionneur, lesdits paramètres étant collectés dans une étape préalable de paramétrage ;
  o de calcul d'un effort en attaque et d'un effort en détente par application de coefficients à l'effort symétrique obtenus à partir de la table de données pré-établie, le coefficient appliqué pour obtenir l'effort en attaque étant sensiblement différent du coefficient appliqué pour obtenir l'effort en détente pour un ensemble déterminé de situations de vie du véhicule ;

- une étape de commande de l'actionneur depuis la valeur de l'effort en attaque et de la valeur de l'effort en détente.

Lorsque la situation de vie du véhicule correspond à une sollicitation du système de freinage et que les roues du véhicule ne sont pas bloquées, l'effort en attaque peut être obtenu par application d'un coefficient inférieure à celui du coefficient appliqué à l'effort en détente.

Dans un mode de réalisation, une situation de vie relative à la sollicitation du système de freinage est déterminée et caractérisée à l'aide d'informations provenant d'un ou plusieurs accéléromètres longitudinaux et/ou de capteurs de position de la pédale de frein.

Dans un autre mode de réalisation, lorsque la situation de vie du véhicule correspond à une sollicitation du système de direction et que les roues du véhicule ne sont pas bloquées :

o lorsque l'angle du volant est positif, supérieur à un seuil prédéterminé positif et que la vitesse du volant est positive, si l'actionneur est situé :

■ sur la roue avant gauche, l'effort en attaque est obtenu par application d'un coefficient inférieure à celui du coefficient appliqué à l'effort en détente ;
■ sur la roue avant droite, l'effort en attaque est obtenu par application d'un coefficient supérieure à celui du coefficient appliqué à l'effort en détente ;
■ sur la roue arrière gauche, l'effort en attaque est obtenu par application d'un coefficient inférieure à celui du coefficient appliqué à l'effort en détente ;
■ sur la roue arrière droite, l'effort en attaque est obtenu par application d'un coefficient supérieur à celui du coefficient appliqué à l'effort en détente ;

o lorsque l'angle du volant est positif, supérieur à un seuil prédéterminé positif et que la vitesse du volant est négative et inférieure à un seuil prédéterminé négatif, l'effort en attaque est obtenu par application d'un coefficient inférieure à celui du coefficient appliqué à l'effort en détente ;
o lorsque l'angle du volant est négatif, inférieur à un seuil prédéterminé négatif et que la vitesse du volant est négative, si l'actionneur est situé :

■ sur la roue avant gauche, l'effort en attaque est obtenu par application d'un coefficient supérieur à celui du coefficient appliqué à l'effort en détente ;
■ sur la roue avant droite, l'effort en attaque est obtenu par application d'un coefficient inférieur à celui du coefficient appliqué à l'effort en détente ;
■ sur la roue arrière gauche, l'effort en attaque est obtenu par application d'un coefficient supérieur à celui du coefficient appliqué à l'effort en détente ;
■ sur la roue arrière droite, l'effort en attaque est obtenu par application d'un coefficient inférieur à celui du coefficient appliqué à l'effort en détente ;

o lorsque l'angle du volant est négatif, inférieur à un seuil prédéterminé négatif et que la vitesse du volant est positive et supérieure à un seuil prédéterminé positif, l'effort en attaque est obtenu par application d'un coefficient inférieure à celui du coefficient appliqué à l'effort en détente.

Dans un mode de réalisation, une situation de vie relative à la sollicitation du système de direction du véhicule peut être déterminée et caractérisée à l'aide d'informations provenant d'un ou plusieurs accéléromètres latéraux et/ou de capteur d'angle et de vitesse du volant.

Dans un mode de réalisation, le coefficient appliqué à l'effort en attaque et le coefficient appliqué à l'effort en détente sont ajustés en fonction de la vitesse du véhicule ou en fonction de la vitesse de débattement à la roue.

L'invention a aussi pour objet un système de commande de suspension pour véhicule comportant une caisse, au moins une roue, une suspension comportant au moins un actionneur couplé à la roue. Le système comprend au moins un calculateur permettant de fournir une valeur d'effort à l'actionneur selon le procédé selon l'invention à partir d'informations de vitesse de débattement et de vitesse de véhicule, et d'informations permettant de détecter et caractériser la situation de vie du véhicule.

Selon une variante, l'actionneur est un actionneur semi-actif.

Selon une autre variante de l'invention, le système de commande comprend un calculateur central commandant l'ensemble des actionneurs couplés aux différentes roues.

Selon une autre variante de l'invention, le système de commande comprend au moins un calculateur local décentralisé couplé à au moins une roue.

Selon une autre variante, Il comprend à la fois des calculateurs délocalisés couplés à chacune des roues et un calculateur central

L'invention a notamment pour avantages qu'elle permet de minimiser sensiblement le roulis et le tangage de la caisse du véhicule. En outre, l'invention réduit efficacement le transfert de masse maximal du véhicule. In fine, l'invention aboutit à l'amélioration du comportement dynamique du véhicule sans sacrifier au confort des passagers.

D'autres caractéristiques et avantages de l'invention apparaîtront à l'aide de la description qui suit faite en regard des dessins annexés qui représentent :

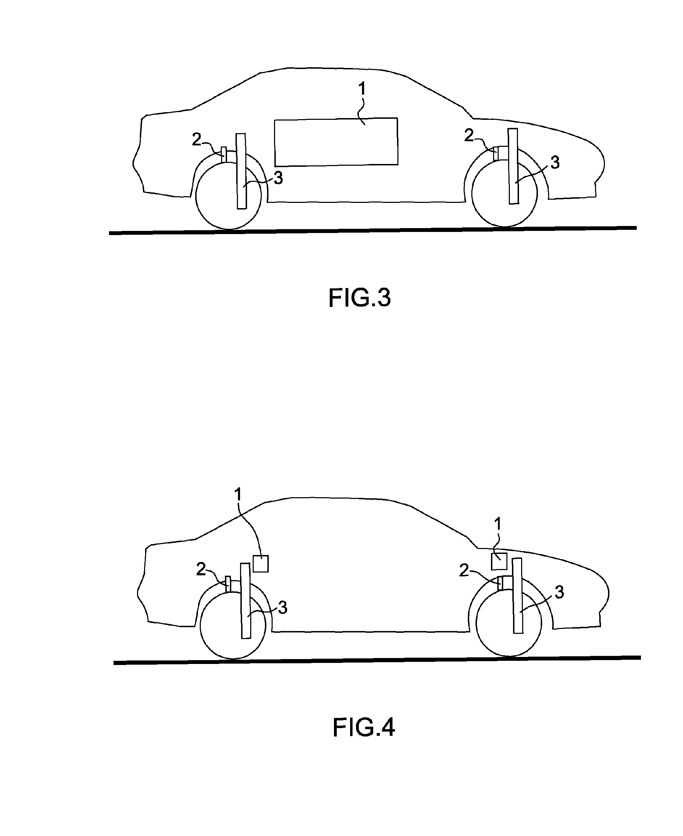

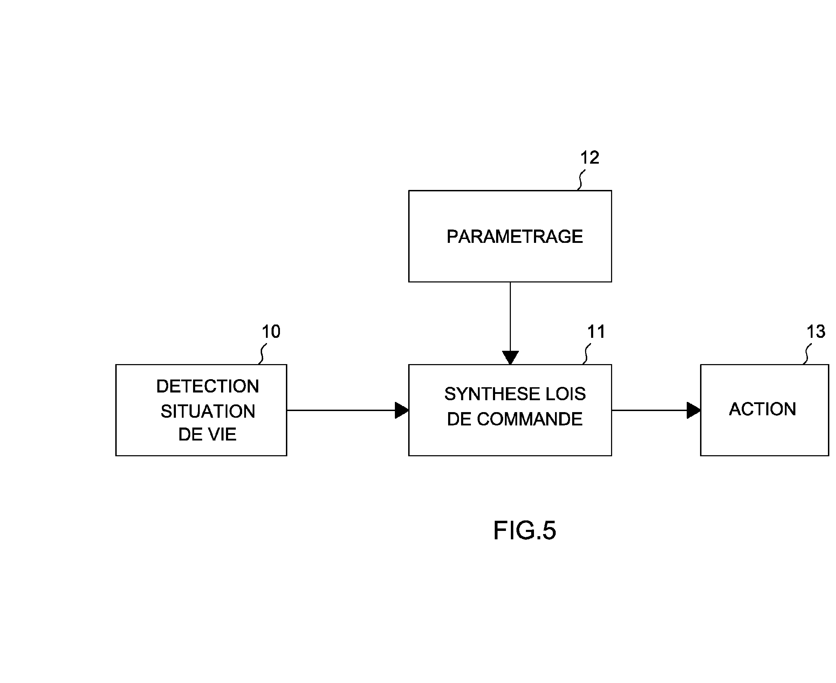

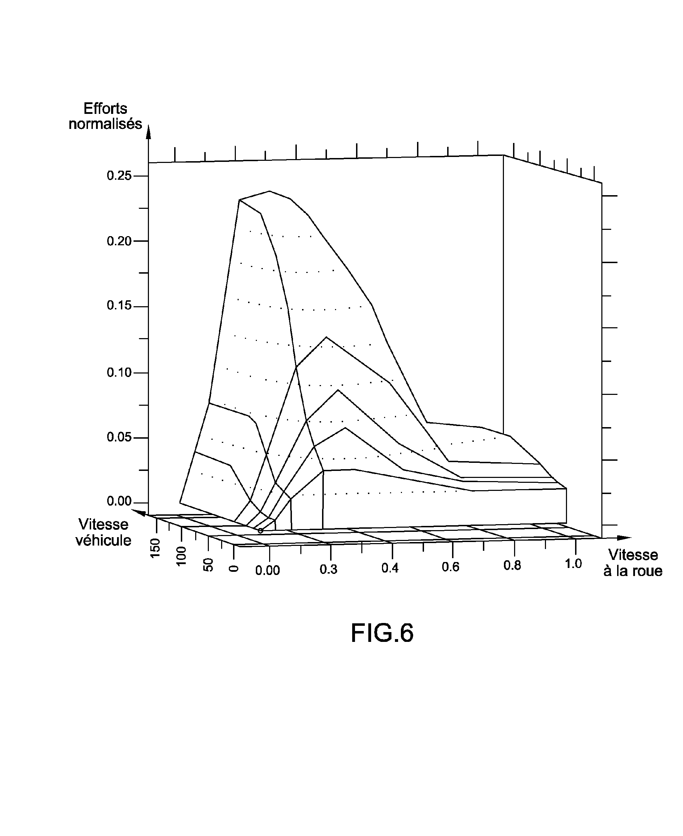

o la figure 1, déjà décrite, un schéma de suspension passive selon l'art connu ;
o la figure 2, déjà décrite, un schéma de suspension active ou semi-active selon l'art connu ;
o la figure 3, un schéma de véhicule comportant un système de suspension selon l'invention intégrant un procédé de commande de suspension à centre de gravité optimisé selon l'invention ;
o la figure 4, un schéma de véhicule comportant un autre mode de réalisation du système de suspension selon l'invention intégrant un procédé de commande de suspension à centre de gravité optimisé selon l'invention ;
o la figure 5, les étapes de procédé utilisées dans le procédé de commande selon l'invention ;
o la figure 6, un exemple de table à trois dimensions de l'effort demandé à l'amortisseur.

La figure 3 illustre, par un schéma, un véhicule comportant un système de suspension selon l'invention intégrant un procédé de commande de suspension à centre de gravité optimisé selon l'invention. Selon une première variante de l'invention, le véhicule automobile comporte un calculateur central 1 relié à quatre actionneurs 3 (un par roue) dont sont équipées les suspensions au niveau des quatre roues du véhicule. Les actionneurs 3 peuvent avantageusement être semi-actifs. Sur la figure, seuls les actionneurs 3 des roues avant droite et arrière droite sont représentés. Chaque roue est également couplée à un détecteur 2 capable de fournir une information de vitesse de débattement relatif entre ladite roue et la caisse du véhicule. Le calculateur central 1 est notamment adapté à la mise en oeuvre du procédé selon l'invention en implémentant la stratégie de lois de contrôle commande des actionneurs 3. De manière générale, le calculateur 1 reçoit les informations nécessaires à la détermination de la situation de vie dans laquelle se trouve le véhicule à chaque instant. Plus particulièrement, le calculateur central 1 reçoit des informations permettant de déterminer les situations de vie du véhicule correspondant d'une part à une sollicitation du système de freinage et d'autre part à une sollicitation du système de direction du véhicule. Concernant la situation de vie relative à la sollicitation du système de freinage, elle peut être établie sur la base d'informations provenant d'un ou plusieurs accéléromètres longitudinaux et/ou de capteurs de position de la pédale de frein. Concernant la situation de vie relative à la sollicitation du système de direction, elle peut être établie sur la base d'informations provenant d'un ou plusieurs accéléromètres latéraux et/ou de capteur d'angle et de vitesse du volant. Le calculateur central reçoit des informations permettant d'établir si le véhicule est dans une situation de blocage des roues (désigné généralement par l'acronyme ABR).

La figure 4 illustre par un schéma un véhicule comportant un autre mode de réalisation du système de suspension selon l'invention intégrant un procédé de commande de suspension à centre de gravité optimisé selon l'invention. Selon une seconde variante de l'invention, le véhicule automobile comporte des calculateurs délocalisés 1 et couplés à chacune des roues. Il est également envisageable de cumuler l'emploi d'un calculateur central et de calculateurs locaux, le calculateur central pouvant notamment gérer les informations de vitesse longitudinale du véhicule alors que les calculateurs délocalisés gèrent les informations de vitesses de débattement au niveau des roues.

La figure 5 illustre les étapes de procédé utilisées dans le procédé de commande selon l'invention. Le procédé de commande selon l'invention comporte une étape 10 de détection de situation de vie du véhicule. Plus précisément, l'étape 10 permet de détecter et de caractériser les situations de vie du véhicule correspondant d'une part à une sollicitation du système de freinage et d'autre part à une sollicitation du système de direction du véhicule. Concernant la situation de vie relative à la sollicitation du système de freinage, le procédé détecte à l'étape 10 cette situation à l'aide d'informations provenant d'un ou plusieurs accéléromètres longitudinaux et/ou de capteurs de position de la pédale de frein. L'étape 10 peut en outre utiliser tout autre moyen permettant de déterminer l'intention de freinage du conducteur. Concernant la situation de vie relative à la sollicitation du système de direction, le procédé détecte à l'étape 10 cette situation à l'aide d'informations provenant d'un ou plusieurs accéléromètres latéraux et/ou de capteur d'angle et de vitesse du volant. De plus, à l'étape 10, le procédé selon l'invention reçoit les informations permettant d'établir si le véhicule est dans une situation de blocage des roues (désigné généralement par l'acronyme ABR).

Le procédé comporte une étape 11 de synthèse de loi de contrôle commande (désignée généralement par l'acronyme LCC) du système de suspension, ladite étape 11 adaptant notamment les coefficients attaque/détente des actionneurs 3 du système de suspension en fonction de la situation de vie du véhicule déterminée à l'étape 10. L'étape 11 génère en temps réel, à partir de lois de contrôle commande type pour chaque actionneur 3, des lois de contrôle commande d'effort optimisées à appliquer à chaque actionneur 3 du système de suspension en fonction de la situation de vie du véhicule.

Plus précisément, les lois de contrôle commande type utilisées à l'étape 11 peuvent être construites à partir d'une table de données pré-établie, représentée à la figure 6, répertoriant pour des vitesses de véhicule et des vitesses de débattement données, l'effort nécessaire à appliquer à un actionneur 3 couplé à une roue. Ainsi, durant le déplacement du véhicule, des moyens de détection permettent de fournir en temps réel, les paramètres de vitesse longitudinale du véhicule et de vitesse de débattement. Ces paramètres, collectés de manière continue dans une étape 12 de paramétrage, sont corrélés à la table et une valeur d'effort est déterminée pour être appliquée à chaque actionneur. L'effort ainsi obtenu est un effort symétrique entre l'attaque et la détente pour chaque actionneur, c'est-à-dire que l'effort en attaque est sensiblement égal à l'effort en détente.

L'étape 11 du procédé selon l'invention introduit en fonction de la situation de vie du véhicule une asymétrie, c'est-à-dire une différence, entre l'effort en attaque et l'effort en détente pour chaque actionneur 3. L'étape 11 applique si nécessaire un coefficient différent entre l'attaque et la détente aux valeurs d'effort obtenues. Le coefficient peut être multiplicatif. Un coefficient multiplicatif entraînant une augmentation de l'effort sera supérieur à 1. Un coefficient multiplicatif entraînant une diminution de l'effort sera inférieur à 1. Le coefficient peut être additif. Un coefficient additif entraînant une augmentation de l'effort sera supérieur à 0. Un coefficient additif entraînant une diminution de l'effort sera inférieur à 0. L'effort sera rendu dissymétrique lorsque le véhicule n'est pas dans une situation de blocage des roues et qu'aura été détectée à l'étape 10 une situation de vie relative soit à la sollicitation du système de freinage soit à la sollicitation du système de direction. Dans les autres situations de vie, par exemple en cas de blocage des roues, l'effort restera symétrique. La dissymétrie a pour effet d'améliorer le confort, la tenue de route, la tenue de caisse. Un effort trop important en compression peut introduire des chocs (roue rencontrant un obstacle) et par conséquent imprimer à la caisse des accélérations ascendantes inconfortables voir destructrices. Il doit en revanche être suffisant pour éviter d'aller trop souvent en butée. En détente, par contre on peut freiner plus fortement le mouvement de la roue sans introduire des accélérations verticales trop importantes. Malgré tout, un effort trop important en détente peut dégrader le contact roue-sol sur route bosselée et provoquer aussi de l'inconfort. L'étape 11 détermine, pour chaque actionneur 3, une loi de contrôle commande avec coefficients symétriques ou non en fonction de la situation de vie du véhicule.

S'il est détecté une situation de vie « freinage » et que les roues du véhicule ne sont pas bloquées, il est appliqué aux 4 actionneurs pour chaque roue un coefficient minimisant l'effort d'attaque et augmentant l'effort de détente. Ce coefficient est un paramètre à régler afin de s'adapter à chaque véhicule. Par exemple, il peut être choisit un coefficient multiplicatif de 0.7 en attaque et 1.3 en détente.

S'il est détecté une situation de vie « action volant » et que les roues du véhicule ne sont pas bloquées, plusieurs cas sont à envisager. Dans les tableaux ci-dessous, le signe - indique que le coefficient appliqué à l'actionneur de la roue correspondante sera inférieur au coefficient symétrique correspondant, le signe + indique que le coefficient sera supérieur. La valeur absolue choisie pour ces coefficients est à déterminer en fonction du véhicule.

1° cas : Si l'angle du volant est positif, supérieur à un seuil prédéterminé positif et que la vitesse du volant est positive, les coefficients en attaque et en détente seront choisis conformément au tableau ci-après :

|  | Attaque | Détente |
|---|---|---|
| Roue avant gauche | - | + |
| Roue avant droite | + | - |
| Roue arrière gauche | - | + |
| Roue arrière droite | + | - |

2° cas : Si l'angle du volant est positif, supérieur à un seuil prédéterminé positif et que la vitesse du volant est négative et inférieure à un seuil prédéterminé négatif, les coefficients en attaque et en détente seront choisis conformément au tableau ci-après :

|  | Attaque | Détente |
|---|---|---|
| Roue avant gauche | - | + |
| Roue avant droite | - | + |
| Roue arrière gauche | - | + |
| Roue arrière droite | - | + |

3° cas : Si l'angle du volant est négatif, inférieur à un seuil prédéterminé négatif et que la vitesse du volant est négative, les coefficients en attaque et en détente seront choisis conformément au tableau ci-après :

|  | Attaque | Détente |
|---|---|---|
| Roue avant gauche | + | - |
| Roue avant droite | - | + |
| Roue arrière gauche | + | - |
| Roue arrière droite | - | + |

4˚ cas : Si l'angle du volant est négatif, inférieur à un seuil prédéterminé négatif et que la vitesse du volant est positive et supérieure à un seuil prédéterminé positif, les coefficients en attaque et en détente seront choisis conformément au tableau ci-après :

|  | Attaque | Détente |
|---|---|---|
| Roue avant gauche | - | + |
| Roue avant droite | - | + |
| Roue arrière gauche | - | + |
| Roue arrière droite | - | + |

Les 4 situations exposées ci-avant sont exclusives en elles. Ces 4 situations sont aussi exclusives avec la ligne droite.

Dans une étape 13 du procédé selon l'invention, les lois déterminées à l'étape 12 sont mise en oeuvre par les actionneurs. L'étape 13 est une étape de commande de l'actionneur depuis la valeur de l'effort en attaque et de la valeur de l'effort en détente reçues de l'étape 12 pour chaque actionneur 3.

Dans un mode de réalisation, les coeficients de la loi de contrôle commande peuvent être ajustés à l'étape 11 du procédé selon l'invention, par modification de la valeur calculée des coefficients calculées à l'étape 11 par le procédé selon l'invention. En particulier, les coefficients peuvent être ajustés en fonction de la vitesse du véhicule pour obtenir un typage différent sous neutre ou sur vireur. Typiquement en dessous de 90 km.h$^{-1}$, les coefficients seront ajustés afin d'obtenir un typage réactif du comportement du véhicule alors qu'au dessus, un typage sous vireur du comportement du véhicule sera recherché pour apporter de la sécurtité. Alternativement, les coefficients peuvent être ajustés en fonction de la vitesse de débattement à la roue.

**Revendications**

1.  Procédé de commande de suspension pour véhicule, notamment pour véhicule automobile, comportant une caisse (1), au moins une roue, un système de suspension comportant au moins un actionneur (3) couplé à la roue, **caractérisé en ce qu'**il comprend les étapes suivantes :

    - une étape (10) de détection de situations de vie du véhicule ;
    - une étape (11) de synthèse d'une loi de contrôle commande du système de suspension adaptée à la situation de vie et aux paramètres du véhicule, ladite étape (11) comprenant les étapes :

      o d'obtention dans une table de données pré-établie d'un effort symétrique à appliquer à l'actionneur (3) en fonction des paramètres de vitesse longitudinale du véhicule et de vitesse de débattement de l'actionneur (3), lesdits paramètres étant collectés dans une étape (12) de paramétrage préalable;
      o de calcul d'un effort en attaque et d'un effort en détente par application de coefficients à l'effort symétrique obtenus à partir de la table de données pré-établie, le coefficient appliqué pour obtenir l'effort en attaque étant sensiblement différent du coefficient appliqué pour obtenir l'effort en détente pour un ensemble déterminé de situations de vie du véhicule ;

    - une étape (13) de commande de l'actionneur (3) depuis la valeur de l'effort en attaque et de la valeur de l'effort en détente.

**2.** Procédé selon la revendication 1, **caractérisé en ce que**, lorsque la situation de vie du véhicule correspond à une sollicitation du système de freinage et que les roues du véhicule ne sont pas bloquées, l'effort en attaque est obtenu par application d'un coefficient inférieure à celui du coefficient appliqué à l'effort en détente.

**3.** Procédé selon la revendication 2, **caractérisé en ce qu'**une situation de vie relative à la sollicitation du système de freinage est déterminée et **caractérisée** à l'aide d'informations provenant d'un ou plusieurs accéléromètres longitudinaux et/ou de capteurs de position de la pédale de frein.

**4.** Procédé selon l'une des quelconques revendications 1 à 3, **caractérisé en ce que**, lorsque la situation de vie du véhicule correspond à une sollicitation du système de direction et que les roues du véhicule ne sont pas bloquées :

o lorsque l'angle du volant est positif, supérieur à un seuil prédéterminé positif et que la vitesse du volant est positive, si l'actionneur est située :

■ sur la roue avant gauche, l'effort en attaque est obtenu par application d'un coefficient inférieure à celui du coefficient appliqué à l'effort en détente ;
■ sur la roue avant droite, l'effort en attaque est obtenu par application d'un coefficient supérieure à celui du coefficient appliqué à l'effort en détente ;
■ sur la roue arrière gauche, l'effort en attaque est obtenu par application d'un coefficient inférieure à celui du coefficient appliqué à l'effort en détente ;
■ sur la roue arrière droite, l'effort en attaque est obtenu par application d'un coefficient supérieur à celui du coefficient appliqué à l'effort en détente ;

o lorsque l'angle du volant est positif, supérieur à un seuil prédéterminé positif et que la vitesse du volant est négative et inférieure à un seuil prédéterminé négatif, l'effort en attaque est obtenu par application d'un coefficient inférieure à celui du coefficient appliqué à l'effort en détente ;
o lorsque l'angle du volant est négatif, inférieur à un seuil prédéterminé négatif et que la vitesse du volant est négative, si l'actionneur est située :

■ sur la roue avant gauche, l'effort en attaque est obtenu par application d'un coefficient supérieur à celui du coefficient appliqué à l'effort en détente ;
■ sur la roue avant droite, l'effort en attaque est obtenu par application d'un coefficient inférieur à celui du coefficient appliqué à l'effort en détente ;
■ sur la roue arrière gauche, l'effort en attaque est obtenu par application d'un coefficient supérieur à celui du coefficient appliqué à l'effort en détente ;
■ sur la roue arrière droite, l'effort en attaque est obtenu par application d'un coefficient inférieur à celui du coefficient appliqué à l'effort en détente ;

o lorsque l'angle du volant est négatif, inférieur à un seuil prédéterminé négatif et que la vitesse du volant est positive et supérieure à un seuil prédéterminé positif, l'effort en attaque est obtenu par application d'un coefficient inférieure à celui du coefficient appliqué à l'effort en détente.

**5.** Procédé selon l'une des quelconques revendications 2 à 4 **caractérisé en ce qu'**une situation de vie relative à la sollicitation du système de direction du véhicule est déterminée et **caractérisée** à l'aide d'informations provenant d'un ou plusieurs accéléromètres latéraux et/ou de capteur d'angle et de vitesse du volant.

**6.** Procédé selon l'une des quelconques revendications 2 à 5 **caractérisé en ce que** le coefficient appliqué à l'effort en attaque et le coefficient appliqué à l'effort en détente sont ajustés en fonction de la vitesse du véhicule ou en fonction de la vitesse de débattement à la roue.

**7.** Système de commande de suspension pour véhicule comportant une caisse, au moins une roue, une suspension comportant au moins un actionneur couplé à la roue, **caractérisé en ce qu'**il comprend au moins un calculateur (1) permettant de fournir une valeur d'effort à l'actionneur (4) selon le procédé d'une des revendications 1 à 5 à partir d'informations de vitesse de débattement et de vitesse de véhicule, et d'informations permettant de détecter et caractériser la situation de vie du véhicule.

**8.** Système de commande selon la revendication 7, **caractérisé en ce que** l'actionneur (3) est semi-actif.

9.  Système de commande selon l'une des revendications 7 ou 8, **caractérisé en ce que** le véhicule comporte au moins deux roues et au moins un actionneur (3) couplé à chaque roue.

10. Système de commande selon la revendication 7, **caractérisé en ce qu'**il comprend un calculateur (1) central commandant l'ensemble des actionneurs (3) couplés aux différentes roues.

11. Système de commande selon la revendication 7, **caractérisé en ce qu'**il comprend au moins un calculateur (1) local décentralisé au niveau d'au moins une roue.

12. Système de commande selon la revendication 7, **caractérisé en ce que** chaque roue est couplée à un calculateur (1) local décentralisé et qu'il comprend en outre un calculateur (1) central coopérant avec chaque calculateur (1) local.

FIG.1

FIG.2

FIG.3

FIG.4

EP 1 884 381 A2

```
                                    ┌─────────────────────┐  12
                                    │                     │
                                    │    PARAMETRAGE      │
                                    │                     │
                                    └──────────┬──────────┘
                                               │
                                               │
                                               ▼
┌──────────────────┐ 10    ┌─────────────────────┐ 11    ┌──────────────┐ 13
│    DETECTION     │       │   SYNTHESE LOIS     │       │              │
│    SITUATION     │──────▶│   DE COMMANDE       │──────▶│    ACTION    │
│     DE VIE       │       │                     │       │              │
└──────────────────┘       └─────────────────────┘       └──────────────┘
```

FIG.5

FIG.6